(19) Europäisches Patentamt
European Patent Office
Office européen des brevets

(11) **EP 3 011 840 A1**

(12) **EUROPEAN PATENT APPLICATION**
published in accordance with Art. 153(4) EPC

(43) Date of publication:
**27.04.2016 Bulletin 2016/17**

(21) Application number: **14806830.7**

(22) Date of filing: **06.06.2014**

(51) Int Cl.:
*A23K 50/00* (2016.01)  *A23K 10/00* (2016.01)
*A23K 30/15* (2016.01)  *A23K 40/00* (2016.01)

(86) International application number:
**PCT/JP2014/065088**

(87) International publication number:
**WO 2014/196628 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2013  JP 2013120262**

(71) Applicant: Unicharm Corporation
**Ehime 799-0111 (JP)**
(72) Inventors:
• IKEZAKI Yuma
Itami-shi
Hyogo 664-0831 (JP)
• USUI Takahiro
Itami-shi
Hyogo 664-0831 (JP)

(74) Representative: **Dolleymores**
**9 Rickmansworth Road**
**Watford, Hertfordshire WD18 0JU (GB)**

(54) **PET FOOD AND METHOD FOR MANUFACTURE OF PET FOOD**

(57)    There is provided pet food in which the pet food is gel type pet food, the moisture content is 50% by weight or greater, the viscosity is in a range of 20 dPa·s to 35 dPa·s, the ratio of fractions which do not pass through a sieve having a mesh of 4 mm is in a range of 70% by weight to 95% by weight, and one or more gelling agents and one or more thickeners are contained.

**Description**

Technical Field

The present invention relates to pet food. More specifically, the present invention relates to gel-like pet food containing a gelling agent and a thickener.
Priority is claimed on Japanese Patent Application No. 2013-120262, filed on June 6, 2013, the content of which is incorporated herein by reference.

Background Art

In recent years, various types of pet food are on the market. Dry type pet food with a low moisture content is the mainstream because dry type pet food has excellent storage stability and is inexpensive. Meanwhile, wet type pet food which contains a liquid-like soup and whose moisture content is high is increasingly sold.
Further, among wet type pet food, pet food which can be eaten without chewing in a case of a pet that does not have teeth or has weak teeth because of juvenility, an old age, or disease by forming the soup portion in a jelly state is disclosed (PTL 1).

Citation List

Patent Literature

[PTL 1] Japanese Unexamined Patent Application, First Publication No. 2007-20448

Summary of Invention

Technical Problem

While various kinds of pet food have been on the market, in order to please a pet cloyed with pet food of the related art, pet food with excellent palatability and has excellent biting properties of a pet has been demanded. Further, new elaborate pet food has been required.
The present invention has been made in consideration of the above-described problems, and an object thereof is to provide pet food with excellent palatability, has excellent biting properties of a pet, and is unknown in the related art and to provide a method of producing the pet food.

Solution to Problem

According to a first aspect of the present invention, there is provided a pet food, in which the pet food is gel type pet food, the moisture content is 50% by weight or greater, the viscosity is in a range of 20 dPa·s to 35 dPa·s, the ratio of fractions which do not pass through a sieve having a mesh of 4 mm is in a range of 70% by weight to 95% by weight, and the pet food containing at least one gelling agent and at least one thickener.
According to a second aspect of the present invention, in the pet food according to the first aspect, the gelling agent is at least one selected from the group consisting of locust bean gum, carrageenan, agar, gellan gum, pectin, and alginic acid, and the thickener is at least one selected from the group consisting of xanthan gum, guar gum, starch, gum Arabic, and tara gum.
According to a third aspect of the present invention, in the pet food according to the first or second aspect, the sinking speed of an iron ball having a diameter of 1 cm and a weight of 4.5 g in a soup portion of the pet food is in the range of 2 cm/min to 18 cm/min.
According to a fourth aspect of the present invention, in the pet food according to any one of the first to third aspects, the ratio of fractions which do not pass through a sieve having a mesh of 10 mm is in the range of 33% by weight to 85% by weight and is less than or equal to the ratio of fractions which do not pass through the sieve having a mesh of 4 mm.
According to a fifth aspect of the present invention, the pet food according to any one of the first to fourth aspects contains flakes derived from at least one raw material selected from the group consisting of cattle, chicken, sheep, pigs, tuna, bonito, sardines, barracuda, sea bream, flounder, mackerel, and horse mackerel, and the ratio of the flakes having a major axis of 30 mm or less is 90% by weight or greater with respect to the entire amount of the flakes.
According to a sixth aspect of the present invention, the pet food according to any one of the first to fifth aspects contains at least one ingredient selected from the group consisting of seafood, meat, vegetables, grains, mushrooms, eggs, and milk.

According to a seventh aspect of the present invention, in the pet food according to any one of the first to sixth aspects, the ratio of the ingredients is 50% by weight or less.

According to an eighth aspect of the present invention, in the pet food according to any one of the first to seventh aspects, the pet food is a feed for cats.

According to a ninth aspect of the present invention, there is provided a method of producing the pet food according to any one of the first to eighth aspects, including: a process of adjusting the size of ingredients which contain flakes; a process of mixing the ingredients whose size is adjusted with raw materials of a soup portion to obtain a mixture of the ingredients and the raw materials of the soup portion; a process of filling a pouch container with the mixture of the ingredients and the raw materials of the soup portion; and a process of retort-sterilizing the pouch container.

Advantageous Effects of Invention

According to pet food of the present invention and a method of producing the pet food of the present invention, it is possible to provide pet food with excellent palatability, has excellent biting properties of a pet, and is unknown in the related art and to provide a method of producing the pet food. Therefore, even a pet cloyed with pet food in the related art happily eats the pet food of the present invention.

In the present invention, the expression "with excellent palatability" means that the pet food is preferably eaten by a pet.

Description of Embodiments

«Pet food»

Pet food of the present invention is gel type pet food, the moisture content is 50% by weight or higher, the viscosity is in the range of 20 dPa·s to 35 dPa·s, the ratio of fractions which do not pass through a sieve having a mesh of 4 mm is in the range of 70% by weight to 95% by weight, and the pet food containing at least one gelling agent and at least one thickener.

That is, the pet food largely contains moisture, which has a moisture content of 50% by weight or greater, and the ratio of fractions passing through a sieve having a mesh of 4 mm is in the range of 5% by weight to 30% by weight, which is low.

The pet food of the present invention is wet type pet food and contains a soup portion. Hereinafter, in a case where the soup portion is in a liquid state, the soup portion is referred to as a liquid soup (portion). In addition, in a case where the soup portion is gelled, the soup portion is referred to as a jelly (portion) or a gelee (portion). The gelee of the present specification indicates a type of a jelly and a jelly with relatively low viscosity among jellies. Since the pet food of the present invention has a viscosity of 20 dPa·s to 35 dPa·s, the pet food is gel type pet food.

The pet food of the present invention may contain other ingredients in addition to the soup portion. Other ingredients indicate solids other than the soup portion.

The moisture content of the pet food of the present invention is 50% by weight or greater. More specifically, the moisture content is preferably in the range of 65% by weight to 95% by weight and more preferably in the range of 85% by weight to 95% by weight.

<Measurement of moisture content>

The moisture content (% by weight) of the pet food is acquired by a normal pressure heating and drying method. The moisture content acquired by this method includes the moisture in ingredients.

(Normal pressure heating and drying method)

The weight (W1 gram) of an aluminum weighing can is measured in advance as a constant weight value. A sample is put into the aluminum weighing can and the weight (W2 gram) is weighed. Next, the sample is dried under the conditions of 135°C for 2 hours using a forced circulation type hot air drier. The sample stands and cools in a dry atmosphere (in a silica gel desiccator) and the weight thereof (W3 gram) is weighed. The moisture content is acquired from the obtained respective weights using the following expression.

$$\text{Moisture content (unit: \% by weight)} = (W2 - W3) \div (W2 - W1) \times 100$$

<Measurement of viscosity>

The viscosity of the pet food can be acquired as a numerical value of viscous resistance acting on a rotary rotor using a rotational viscometer. For example, the viscosity thereof can be measured using VISCOTESTER. The measurement temperature of the viscosity is set to 25°C.

The viscosity of the pet food of the present invention, which is not particularly limited as long as the viscosity thereof is in the range of 20 dPa·s to 35 dPa·s, is preferably in the range of 22 dPa·s to 33 dPa·s and more preferably in the range of 27 dPa·s to 29 dPa·s from a viewpoint of improving the palatability of a pet.

(Sinking speed of iron ball)

The viscosity of the soup portion in the pet food of the present invention is acquired using the sinking speed of an iron ball. Measurement of the sinking speed of the iron ball is performed by naturally dropping the iron ball into the soup portion after the iron ball stands still in the soup portion and measuring the movement distance of the iron ball after a predetermined time has passed. At the time of measurement, a method of filling a transparent measuring container with a scale with the soup portion can be employed. In regard to the size of the iron ball, for example, an iron ball having a diameter of 95 mm to 105 mm and having a weight of 4 g to 5 g can be used, but the size thereof is not particularly limited thereto. An iron ball suitable for measuring the viscosity of the pet food may be appropriately used.

In a case where the pet food contains ingredients and is in the form of a gelee or a jelly in which the ingredients are not separated from the soup portion, the physical properties of the soup portion are acquired by the following procedures. The ingredients are removed from the gelee portion or the jelly portion of the pet food using a pair of tweezers, only the gelee portion or the jelly portion is separated from the pet food, heated to be in the liquid form, and gelled by being cooled in a measuring container, the iron ball stands still in the gelled gelee portion or jelly portion and is naturally dropped into the gel, and the movement distance of the iron ball is measured after a predetermined time has passed.

The temperature of the soup portion at the time when the sinking speed of the iron ball is measured is set to 25°C.

In regard to the sinking speed of the iron ball in the soup portion of the pet food of the present invention, the sinking speed of the iron ball having a diameter of 1 cm and a weight of 4.5 g is preferably in the range of 2 cm/min to 18 cm/min, more preferably in the range of 2 cm/min to 14 cm/min, still more preferably in the range of 3 cm/min to 13 cm/min, and particularly preferably in the range of 5 cm/min to 11 cm/min, from a viewpoint of improving the palatability of a pet.

When the sinking speed of the iron ball of the soup portion becomes faster, the fluidity of the soup portion is improved and the amount of the soup portion passing through a sieve becomes increased at the time of measuring the physical properties using a sieve described below.

<Measurement of amount of fractions passing through sieve>

The pet food of the present invention has a ratio of fractions, which do not pass through a sieve having a mesh of 4 mm, that is, a mesh-like filter whose one side has an opening of 4 mm (hereinafter, also referred to as a sieve having a mesh of 4 mm), of 70% by weight to 95% by weight with respect to the entire amount of pet food.

The method of measuring the amount of fractions of the pet food passing through a sieve having a predetermined mesh or the amount of fractions thereof remaining on the sieve may be performed by placing the pet food on the sieve and examining the amount thereof passing through the sieve or remaining on the sieve after a predetermined time has passed. For example, the size of the mesh of the sieve may be in the range of 4 mm to 10 mm and the wire diameter thereof may be in the range of 1 mm to 2 mm, but the size of the mesh of the sieve is not particularly limited and a sieve having a mesh and a wire diameter suitable for measuring the physical properties of the pet food can be appropriately selected.

The predetermined time means the time up until the point that the fractions passing through a sieve are not increased due to gravity even when the time has passed, and is usually in the range of 0.2 hours to 24 hours. The area of the sieve is not particularly limited, but clogging may occur when a sieve having an extremely small area is used. A sieve having an area to the extent that clogging can be avoided may be used. In a case where the pet food is placed on a sieve, it is appropriate that the pet food is placed to generally have a thickness of 0.5 cm to 5.0 cm.

By examining the amount of the fractions passing through a sieve having a mesh in the above-described range or the amount of the fractions remaining on the sieve, the fluidity in which physical properties such as the hardness, brittleness, elasticity, and adhesiveness of the soup portion are totally reflected can be measured. In a case where the soup portion is not completely separated from the ingredients, the size of a complex of the soup portion and the ingredients can be measured. In a case where the soup portion has a certain extent of hardness, for example, in a gelee state, or in a case where the complex (the gelee portion and the ingredients) is not subdivided into portions smaller than the mesh-like opening portion on a sieve, the complex does not pass through the sieve. In addition, in the case where the soup portion is not separated from the ingredients at the time of measurement, the size of the soup portion and the ingredients can be respectively measured. In a case where the size of the ingredients is small enough to pass through a sieve having a mesh of 4 mm, the longest diameter (the length of the diameter) of the solid ingredients is shorter than 4 mm.

In the present specification, the amount of fractions passing through a sieve having a predetermined mesh or the amount of fractions remaining on the sieve is a value measured by a method of dividing the soup portion and the ingredient potion in advance to be placed on the sieve without placing the entire amount of the pet food on the sieve.

That is, ingredients are removed from the pet food using a pair of tweezers or the like in advance. At this time, both of the soup portion (the soup portion adhered to the ingredients) forming the complex and the ingredients are removed. After the soup portion is separated from the ingredient portion, the soup portion and the ingredient portion are separately placed on the sieve and the amount of the soup portion and the ingredient portion passing through the sieve after a predetermined time has passed or the amount thereof remaining on the sieve is measured. The measurement result of the soup portion and the measurement result of the ingredient portion are added to each other to obtain a measurement result of the entirety of the pet food.

In the pet food of the present invention, the ratio of the fractions which do not pass through a sieve having a mesh of 4 mm is in the range of 70% by weight to 95% by weight with respect to the entire amount of the pet food. That is, the ratio of fractions passing through a sieve having mesh of 4 mm is in the range of 5% by weight to 30% by weight with respect to the entire amount of the pet food.

In the pet food, in a case where a liquid soup portion separated from ingredients is present, the liquid soup portion passes through a sieve having a mesh of 4 mm. In a case where the soup portion in the form of gelee forms a complex by being adhered to the ingredients, the adhesiveness of the soup portion to the ingredients is weak. When the fluidity of the soup portion is high, the complex is subdivided into portions smaller than the mesh-like opening portion on the sieve having a mesh of 4 mm and easily passes through the sieve having a mesh of 4 mm.

When 5% by weight or greater of the fractions passing through the sieve having a mesh of 4 mm are contained, that is, when the ratio of the fractions which do not pass through the sieve having a mesh of 4 mm is 95% by weight or less, the pet food with a fresh texture is easily obtained.

Meanwhile, ingredients larger than the opening portion of the sieve having a mesh of 4 mm, a complex in which the soup portion in the form of the gelee is not easily separated from the ingredients, or the soup portion in the form of the gelee which is separated from the ingredients and which has relative low fluidity (fluidity in which the hardness, brittleness, elasticity, and the adhesiveness, and fluidity are collectively reflected) is unlikely to pass through the sieve having a mesh of 4 mm. The ingredients and the soup portion which does not pass through the sieve having a mesh of 4 mm can be easily eaten by a pet without leaving the pet food uneaten.

In the pet food, when the ratio of the fractions which do not pass through the sieve having a mesh of 4 mm is 70% by weight or more, that is, when the ration of the fractions passing through the sieve having a mesh of 4 mm is 30% by weight or less, excellent palatability for the pet food and the rate of complete eating of the pet food can be easily obtained.

The ratio of the fractions which do not pass through the sieve having a mesh of 4 mm is preferably in the range of 75% by weight to 94% by weight, more preferably in the range of 80% by weight to 93% by weight, and still more preferably in the range of 85% by weight to 92% by weight.

In addition, it is preferable that the pet food of the present invention has a ratio of fractions, which do not pass through a sieve having a mesh of 10 mm, that is, a mesh-like filter whose one side has an opening of 10 mm (hereinafter, also referred to as a sieve having a mesh of 10 mm), of 33% by weight to 85% by weight with respect to the entire amount of pet food. The ratio of the fractions which do not pass through the sieve having a mesh of 10 mm is less than or equal to the ratio of the fractions which do not pass through the sieve having a mesh of 4 mm. It is preferable that the ratio of the fractions which do not pass through the sieve having a mesh of 10 mm is less than the ratio of the fractions which do not pass through the sieve having a mesh of 4 mm.

Among the fractions which do not pass through the sieve having a mesh of 4 mm, ingredients or a complex containing the ingredients is unlikely to pass through the sieve having a mesh of 10 mm. The soup portion separated from the ingredients easily passes through the sieve having a mesh of 10 mm when the soup portion is in the form of a gelee with relatively high fluidity and is unlikely to pass through the sieve having a mesh of 10 mm when the soup portion is in the form of a jelly with relatively low fluidity.

The fractions which do not pass through the sieve having a mesh of 10 mm largely contain ingredients. The fractions which pass through the sieve having a mesh of 10 mm and do not pass through the sieve having a mesh of 4 mm largely contain the soup portion in the form of a gelee with relatively high fluidity. The ingredients and the soup portion can be easily eaten at the same time by a pet when such fractions are appropriately contained.

When the fractions which do not pass through the sieve having a mesh of 10 mm and the fractions which pass through the sieve having a mesh of 10 mm and do not pass through the sieve having a mesh of 4 mm are contained in a well-balanced manner, both of the ingredients and the soup portion can be easily eaten by a pet at the same time and thus excellent palatability of a pet for the pet food and the rate of complete eating of the pet food can be easily obtained.

Specifically, it is preferable that the ratio of fractions which do not pass through the sieve having a mesh of 4 mm is in the range of 70% by weight to 95% by weight and the ratio of fractions which do not pass through the sieve having a mesh of 10 mm is in the range of 33% by weight to 85% by weight with respect to the entire amount of pet food. At this time, the ratio of fractions which pass through the sieve having a mesh of 10 mm and do not pass through the sieve having a mesh of 4 mm is in the range of 10% by weight to 62% by weight and preferably in the range of 20% by weight to 50% by weight.

Further, the sum of the ratio of fractions which do not pass through the sieve having a mesh of 10 mm and the ratio of fractions which pass through the sieve having a mesh of 10 mm and do not pass through the sieve having a mesh of 4 mm is equivalent to the ratio of fractions which do not pass through the sieve having a mesh of 4 mm.

It is more preferable that the ratio of fractions which do not pass through the sieve having a mesh of 4 mm is in the range of 75% by weight to 94% by weight and the fractions which do not pass through the sieve having a mesh of 10 mm is in the range of 36% by weight to 70% by weight. At this time, the fractions which pass through the sieve having a mesh of 10 mm and do not pass through the sieve having a mesh of 4 mm is in the range of 10% by weight to 55% by weight and preferably in the range of 20% by weight to 45% by weight.

It is still more preferable that the ratio of fractions which do not pass through the sieve having a mesh of 4 mm is in the range of 80% by weight to 93% by weight and the fractions which do not pass through the sieve having a mesh of 10 mm is in the range of 38% by weight to 60% by weight. At this time, the fractions which pass through the sieve having a mesh of 10 mm and do not pass through the sieve having a mesh of 4 mm is in the range of 20% by weight to 55% by weight and preferably in the range of 30% by weight to 45% by weight.

It is particularly preferable that the ratio of fractions which do not pass through the sieve having a mesh of 4 mm is in the range of 85% by weight to 92% by weight and the fractions which do not pass through the sieve having a mesh of 10 mm is in the range of 38% by weight to 60% by weight. At this time, the fractions which pass through the sieve having a mesh of 10 mm and do not pass through the sieve having a mesh of 4 mm is in the range of 25% by weight to 54% by weight and preferably in the range of 30% by weight to 40% by weight.

<Gelling agent and thickener>

The gelling agent is not particularly limited as long as the gelling agent is a material that allows an aqueous solution to be gelled when added to the aqueous solution, and examples thereof include locust bean gum, carrageenan, agar, gellan gum, pectin, low methoxyl pectin, konjac mannan, alginic acid, sodium alginate, furcellarun, and gelatin. As the gelling agent used in the present invention, locust bean gum, carrageenan, agar, gellan gum, pectin, or alginic acid is preferable. In the carrageenan, there are three types of $\kappa$ (kappa), $\iota$ (iota), and $\lambda$ (lambda). In the present invention, all of these can be used, but $\kappa$ (kappa) carrageenan is particularly preferable. The degree of purification of the gelling agent is not particularly limited and a commercially available product can be used as the gelling agent.

The thickener is not particularly limited as long as the thickener is a material that increases the viscosity of an aqueous solution without allowing the aqueous solution to be gelled, and examples thereof include tragacanth gum, karaya gum, gum Arabic, xanthan gum, guar gum, tamarind seed gum, psyllium seed gum, gum Arabic, tara gum, starch, curdlan, pullulan, arabinogalactan, chitosan, and a cellulose derivative. As the thickener used in the present invention, xanthan gum, guar gum, starch, gum Arabic, or tara gum is particularly preferable. The degree of purification of the thickener is not particularly limited and a commercially available product can be used as the thickener.

Since the pet food of the present invention contains both of the gelling agent and the thickener described above, the pet food thereof is a gel-like and gelee type pet food with appropriate softness (fluidity) or appropriate viscosity. Because of these physical properties of the pet food of the present invention, pet food with excellent palatability for dogs can be realized.

The concentration of the gelling agent and the thickener contained in the pet food of the present invention is not particularly limited as long as the physical properties of the pet food of the present invention are realized, but the concentration of the gelling agent is preferably in the range of 0.05% by weight to 0.3% by weight, more preferably in the range of 0.07% by weight to 0.2% by weight, and still more preferably in the range of 0.1% by weight to 0.13% by weight based on the soup portion. The concentration of the thickener is preferably in the range of 0.5% by weight to 5% by weight, more preferably in the range of 1.0% by weight to 3.5% by weight, and still more preferably in the range of 1.5% by weight to 2.5% by weight based on the soup portion.

The combination of the gelling agent and the thickener used in the pet food of the present invention is not particularly limited as long as the physical properties of the pet food of the present invention are realized by the combination. The number of use of the thickener and the gelling agent is not particularly limited as long as the combination contains at least one gelling agent and at least one thickener, and the combination may contain plural kinds of gelling agents and plural kinds of thickeners.

Preferable examples of the combination of the gelling agent and the thickener are as follows.

Locust bean gum and carrageenan are used as the gelling agents and xanthan gum, guar gum, and starch are used as the thickeners.

Agar, gellan gum, pectin, and alginic acid are used as the gelling agents and gum Arabic and tara gum are used as the thickener.

Locust bean gum or carrageenan is used as the gelling agent and xanthan gum is used as the thickener.

In regard to the preferable ratio of the gelling agent to the thickener, a combination whose ratio of the gelling agent to the thickener is in the range of 1:10 to 1:30 is preferable, a combination whose ratio of the gelling agent to the thickener is in the range of 1:15 to 1:25 is more preferable, and a combination whose ratio of the gelling agent to the thickener is in the range of 1:18 to 1:20 is still more preferable.

<Ingredients>

The pet food of the present invention may contain flakes as ingredients. Here, the flakes are ingredients which account for a major proportion by weight as ingredients of the pet food, and meat or seafood is preferable as the ingredients. As specific examples of raw materials of the flakes, at least one raw material selected from a group consisting of cattle, chicken, sheep, pigs, tuna, bonito, sardines, barracuda, sea bream, flounder, mackerel, and horse mackerel is exemplified.

In the pet food of the present invention, the ratio of the flakes whose major axis is preferably 30 mm or less is 90% by weight or greater with respect to the entire amount of the flakes. The ratio of the flakes which pass through the sieve having an opening of 30 mm and do not pass through the sieve having an opening of 10 mm is more preferably 90% by weight or greater with respect to the entire amount of the flakes.

Since the ingredients whose size is small enough to pass through the sieve having an opening of 30 mm are sufficiently entangled with the gelee portion of the pet food and the ingredients are also entangled with each other, the palatability for the pet food and the rate of complete eating of pet food can be improved. In addition, the appearance of the ingredients which do not pass through the sieve having an opening of 10 mm is excellent, and adherence of the ingredients to a packaging container for sale and a container for feed for pet food can be reduced.

Since the suitable size of the pet food is the size in which a cat can easily eat the pet food, the palatability of a cat for the pet food of the present invention can be further improved.

<Raw materials>

Raw materials constituting the pet food are not particularly limited and raw materials being used for pet food in the related art can be used. For example, meat derived from domestic animals such as cattle, pigs, and chickens and various kinds of fish can be used. In addition to the raw materials whose main component is protein, grains largely containing carbohydrate components normally required by pets or vegetable food largely containing dietary fibers may be used.

The pet food of the present invention may contain at least one ingredient selected from a group consisting of seafood, meat, vegetables, grains, mushrooms, eggs, and milk. When the ingredients are contained, the nutritional balance of the pet food is improved and thus the palatability of pets for the pet food can be improved. In a case where the pet food contains plural kinds of ingredients and, particularly, in a case where the pet food contains plural kinds of ingredients selected from the above-described ingredients, the nutritional balance of the pet food can be further improved and thus the palatability of pets for the pet food can be further improved.

Examples of the seafood include tuna, bonito, sardines, barracuda, sea bream, flounder, mackerel, horse mackerel, salmon, trout, saury, shrimp, crab, scallops, squid, and octopus. In addition, seafood processed products (boiled fish paste, tubular fish paste, or a fish ball) are also exemplified.

Examples of the meat include cattle, poultry, lamp, and pork. In addition, meat processed products (molding meat or sausages) are also exemplified.

Examples of the vegetables include cabbage, spinach, pumpkin, green pepper, carrots, burdock, potatoes, asparagus, soybeans, and green peas. In addition, vegetable processed products (tofu and the like) are also exemplified.

Examples of the grains include wheat and corn. In addition, grain processed products (biscuits, grain-containing imitation meat, and the like) are also exemplified.

Examples of the mushrooms include shitake mushroom and mushroom. In addition, mushroom processed products are exemplified.

Examples of the eggs include hen's eggs and quail eggs. In addition, egg processed products are exemplified.

Examples of the milk include cow's milk and goat's milk. In addition, milk processed products (cheese and the like) are exemplified.

In addition, as processed products using seafood, meat, vegetables, grains, mushrooms, eggs, and milk, plural kinds selected from the above-described examples may be used.

In the pet food of the present invention, the ratio of the ingredients is preferably 50% by weight or less, more preferably in the range of 10% by weight to 50% by weight, still more preferably in the range of 15% by weight to 45% by weight, and still far more preferably in the range of 20% by weight to 35% by weight with respect to the entire amount of pet food. When the ratio of the ingredients is set to be in the above-described range, an appropriate feeling of a gelee can be obtained. In addition, pet food with excellent appearance can be realized.

The pet food of the present invention can be fed to all kinds of pets including a dog and a cat, but it is preferable that the pet food thereof is fed to a cat because the palatability of a cat for the pet food is improved.

The pet food may contain ingredients, formed by a known method, in addition to the flakes. The shape of ingredients of the dry type pet food is not particularly limited, and examples thereof include pellet (grains) shapes such as a spherical shape, a polyhedral shape, a cylindrical shape, a donut shape, a plate shape, and a go stone shape (circular, curved tablet, or oval).

In order to inform a pet owner of a pet that the pet food of the present invention is suitable for feeding a cat, the pet food can be sold by displaying the point that the pet food is suitable for a cat on the package at the time when the pet food of the present invention is packaged to be sold.

In the ranges of the present specification and the claims, the term "pet" indicates an animal that has been bred by a person. In a narrower sense, a pet is an animal cared for by the owner. In addition, the "pet food" indicates feed for pets. The pet food of the present invention can be produced and sold as the "feed for animals" or "food for animals."

«Method of producing pet food»

The pet food of the present invention is produced using a method including a process of adjusting the size of ingredients which contain flakes; a process of mixing the ingredients whose size is adjusted with raw materials of the soup portion to obtain a mixture of the ingredients and the raw materials of the soup portion; a process of filling a pouch container with the mixture of the ingredients and the raw materials of the soup portion; and a process of retort-sterilizing the pouch container.

When the size of the ingredients needs to be adjusted, the size thereof is adjusted to the size suitable for a pet to eat the pet food. The size thereof can be adjusted using a known technique. For example, a method of performing a mixing process on pet food to have a minced shape or a method of cutting pet food by a flaker is preferably used. The size of the flake may be adjusted by changing the speed and the time of the flaker and the number of times of passing through the flake.

In addition, the process of producing the pet food of the present invention includes a process of mixing a part or all of the ingredients, water, the gelling agents, the thickeners to obtain a mixture of ingredients and raw materials of the soup portion. The mixing method is not particularly limited, a mixer or a known method using a mixer can be used and, preferably, a method in which the mixture can be uniformly mixed is employed. Depending on the kind or properties of the ingredients, the thickeners, and the gelling agents, a material which is not mixed with the ingredients, the thickeners, and the gelling agents and is to be added to the above-described mixture after the ingredients, the thickeners, and the gelling agents are mixed may be present. The ingredients may be dispersed in the pet food.

The time and the temperature of mixing the raw materials of the pet food can be appropriately set. When the mixing time is adjusted, the size of the solid ingredients and the viscosity of the pet food can be adjusted. Further, when the amount of water to be mixed is adjusted, the viscosity and the moisture content of the pet food can be adjusted. The viscosity of the pet food can be adjusted by the blending amount of the thickeners.

The mixture of the all ingredients and raw materials of the soup portion of the pet food of the present invention is stored in a pouch container, to which pouch processing (laminate processing) is applied, used for known retort food in the related art or the like. As a method of filling the pouch container with the pet food, a known method can be used. At this time, in regard to the amount of the pet food to be stored in the container, approximately one feed may be stored in each container by dividing the pet food to small portions or multiple feeds (for example, three feeds) are collectively stored in a container having a large capacity.

Further, from a viewpoint of capability of long-term storage, the process of producing the pet food of the present invention includes a process of filling the pouch container with pet food and performing retort-sterilization using a known heat treatment or pressurizing treatment in the related art. The retort sterilization process is not particularly limited as long as sterilization is carried out under the condition in which the pet food is sufficiently sterilized and sterilization under the condition in which the flavor of the pet food after the sterilization treatment is not to deteriorate is carried out is preferable. The retort sterilization may be carried out under the conditions of a temperature range of 110°C to 130°C for 30 minutes to 50 minutes. When the heat treatment is carried out, the reactions of thickening and gelling of the thickener and the gelling agent are promoted.

It is preferable that the pet food of the present invention is put into the pouch container to be stored in a vacuum. Since the pouch container is a flexible container, the pet food can be easily taken out to the outside of the container. At this time, by taking the pet food out of the container by handling (squeezing) the pouch treatment, it is possible to avoid for the solid ingredients constituting the pet food to remain in the container. Since the solid ingredients are relatively minute, it takes time and labor for taking the solid ingredients out of the container when they remain in a can or a cup container. This problem can be solved using a pouch container. In general, even when pet food in a state of being inside of a can or a cup container is provided for a pet, it is difficult for the pet food to be eaten because the opening of the container is narrow and thus the pet food is left uneaten in many cases. Accordingly, it is important for the pet food to be easily taken out of the container. In addition, it is also important for the container after the pet food is taken out to be easily discarded and the pouch container is easy to be discarded because the pouch container is not bulky.

[Examples]

Hereinafter, the present invention will be described in detail with reference to Examples, but the present invention is not limited thereto. Hereinafter, "%" means "% by weight."
The production of pet food and measurement of physical properties thereof in Examples were carried out at room temperature (20°C to 25°C) unless otherwise the temperature is not particularly designated.

[Comparative Examples 1 to 3 and Examples 1 and 2]

First, gelling agents, thickeners, other raw materials, and ingredients were prepared at the blending ratio listed in Table 1 and mixed with one another for 5 minutes, thereby obtaining a mixture of the ingredients and the raw materials of a soup portion.
The flakes being used as ingredients and whose size was small enough to pass through a sieve having an opening of 30 mm and was large so as not to pass through a sieve having an opening of 10 mm was 100% by weight of the total amount of flakes.

[Table 1]

| | | Raw materials | Comparative Example 1 | Comparative Example 2 | Comparative Example 3 | Example 1 | Example 2 |
|---|---|---|---|---|---|---|---|
| Soup portion | Gelling agent | Locust bean gum | 0% | 0% | 0% | 0.03% | 0% |
| | | Carrageenan | 1.5% | 0% | 0.9% | 0.05% | 0% |
| | | Agar | 0% | 0% | 0% | 0% | 0.05% |
| | | Gellan gum | 0% | 0% | 0% | 0% | 0.04% |
| | | Pectin | 0% | 0% | 0% | 0% | 0.05% |
| | | Alginic acid | 0% | 0% | 0% | 0% | 0.05% |
| | Thickener | Xanthan gum | 0% | 0% | 0% | 0.04% | 0% |
| | | Guar gum | 0% | 0.4% | 0% | 0.5% | 0% |
| | | Starch | 0% | 0% | 0.2% | 1% | 0% |
| | | Gum Arabic | 0% | 0% | 0% | 0% | 1% |
| | | Tara gum | 0% | 0% | 0% | 0% | 1% |
| | Other raw materials | Seasonings and fish extract | 2% | 2% | 2% | 2% | 2% |
| | | Water | Balance | Balance | Balance | Balance | Balance |
| Ingredients | Flakes | Tuna | 25% | 25% | 25% | 25% | 25% |
| Total | | | 100% | 100% | 100% | 100% | 100% |

EP 3 011 840 A1

The pouch container was filled with the obtained mixture and subjected to a heat treatment at 118°C for 40 minutes, thereby obtaining pet food.

The viscosity of pet food was measured with a viscosity measuring device (VISCOTESTER, model number: VT-03F, manufactured by RION Co., Ltd.). The viscosity thereof was measured by putting the entire amount of pet food into a 500 mL cup for measurement such that 90% or more of the cup was filled with the pet food and then mounting a tip for measurement. In addition, the tip was appropriately selected from accessories of tips for measurement according to the viscosity thereof.

The physical properties using an iron ball were measured on the soup portion obtained by removing ingredients from the pet food according to the above-described method.

The physical properties of the pet food using a sieve were measured by respectively measuring the soup portion and the ingredient portion of 70 g of pet food and combining the results obtained from the soup portion and the ingredient portion. A sieve having a mesh of 4 mm and a wire diameter of 1.3 mm and a sieve having a mesh of 10 mm and a wire diameter of 1.5 mm were used. Pet food was placed on the sieve and the amount of pet food passing through the sieve for 20 minutes was measured.

The moisture content of the pet food was measured using the above-described normal pressure heating and drying method.

The results are listed in Table 2.

[Table 2]

|  | Comparative Example 1 | Comparative Example 2 | Comparative Example 3 | Example 1 | Example 2 |
|---|---|---|---|---|---|
| Viscosity (dPa·s) | Could not measure | 18 | 40 | 27 | 29 |
| Sinking speed of iron ball (cm/min) | Did not sink | 30 | Did not sink | 6 | 6 |
| Ratio of solids which do not pass through sieve having mesh of 4 mm (a + b) | 100% | 50% | 100% | 90% | 90% |
| Ratio of solids which do not pass through sieve having mesh of 10 mm (a) | 100% | 29% | 95% | 40% | 45% |
| Ratio of solids which pass through sieve having mesh of 10 mm and do not pass through sieve having mesh of 4 mm (b) | 0% | 21% | 5% | 50% | 45% |
| Ratio of solids which pass through sieve having mesh of 4 mm (c) | 0% | 50% | 0% | 10% | 10% |
| Moisture content | 81% | 87.3% | 81% | 89% | 89% |
| Ratio of flakes having major axis of 30 mm or less with respect to entire amount of flakes | 100% | 100% | 100% | 100% | 100% |
| Ratio of ingredients | 25% | 25% | 25% | 25% | 25% |
| Evaluation of palatability | - | B | B | A | A |
| Numerical value A: numerical value B | - | 60:40 | 60:40 | 74:26 | 70:30 |

[Evaluation of palatability]

The palatability of cats for each of produced pet food was evaluated by the following method.

The results are listed in Table 2. In the "numerical value A : numerical value B" of Table 2, the numerical value A indicates the height (extent) of palatability with respect to each of the test examples and the numerical value B indicates the height (extent) of palatability with respect to Comparative Example 1. The sum of the numerical value A and the numerical value B is 100. In a case where the numerical value A is 70 or greater, it is evaluated that the palatability of a cat for pet food of the test example is exceedingly high (A). In a case where the numerical value A is 60 or greater, it is evaluated that the palatability of a cat for pet food of the test example is high (B). In a case where the numerical value A is in the range of 50 to less than 60, it is evaluated that the palatability of a cat for pet food of the test example is equivalent to palatability for pet food in the related art (C). In a case where the numerical value A is less than 50, it is evaluated that the palatability of a cat for pet food of the test example is low (D).

A method of evaluating the palatability is as follows. Comparative Example 1 is set as a reference comparative example.

First, the total of four sets of pet food in which pet food of test examples (Examples 1 and 2 and Comparative Examples 2 and 3) with respect to Comparative Examples (Comparative Example 1) was combined was prepared. A test was performed by monitoring twenty cats in each set for 2 days.

In the first day, 40 g of each pet food was fed to one cat at the same time, one pet food fed from the left-hand side of the cat and the other pet food fed from the right-hand side of the cat, and then the amount of pet food eaten by the cat was measured after one hour.

The amount of ingested pet food of test examples and the amount of ingested pet food of Comparative Examples were acquired in terms of the percentage based on the total weight of the pet food eaten by one cat for the first day. The percentages obtained from twenty cats being monitored were averaged and set as the result of the first day.

In the second day, the direction of feeding the cat with the pet food was set to be opposite to that of the first day. That is, 40 g of each pet food was fed to one cat at the same time, one pet food fed from the left-hand side of the cat and the other pet food fed from the right-hand side of the cat, and then the amount of pet food eaten by the cat was measured after one hour.

The amount of ingested pet food of test examples and the amount of ingested pet food of Comparative Examples were acquired in terms of the percentage based on the total weight of the pet food eaten by one cat for the second day. The percentages obtained from twenty cats being monitored were averaged and set as the result of the second day.

Finally, the results of the first and second days were averaged, and the ratios "numerical value A : numerical value B" (palatability) of the amounts of ingested pet food as the final results were acquired. It is indicated that a cat being monitored ate the pet food with a good appetite as the numeric value of the palatability is higher. The results of evaluating the palatability are listed in Table 2.

[Comparative Examples 4 and 5 and Examples 3 to 5]

Pet food having the physical properties listed in Table 3 was produced in the same manner as in Example 1 except that the composition of the gelling agent and the thickener (type and the use amount) were changed. In all Examples, one or more gelling agents and one or more thickeners listed in Table 1 were used. Evaluations of respective items were performed in the same manner as in Example 1. In regard to the method of evaluating the palatability, Comparative Example 1 was set as a reference comparative example. The results are listed in Table 3.

[Table 3]

| | Comparative Example 4 | Example 3 | Example 4 | Comparative Example 5 | Example 5 |
|---|---|---|---|---|---|
| Viscosity (dPa·s) | 20 | 23 | 25 | 38 | 35 |
| Sinking speed of iron ball (cm/min) | 20 | 18 | 13 | 1 | 3 |
| Ratio of solids which do not pass through sieve having mesh of 4 mm (a + b) | 65% | 72% | 75% | 99% | 95% |
| Ratio of solids which do not pass through sieve having mesh of 10 mm (a) | 35% | 35% | 37% | 98% | 85% |
| Ratio of solids which pass through sieve having mesh of 10 mm and do not pass through sieve having mesh of 4 mm (b) | 30% | 37% | 38% | 1% | 10% |
| Ratio of solids which pass through sieve having mesh of 4 mm (c) | 35% | 28% | 25% | 1% | 5% |
| Moisture content | 88% | 88% | 88% | 88% | 88% |
| Ratio of flakes having major axis of 30 mm or less with respect to entire amount of flakes | 100% | 100% | 100% | 100% | 100% |

(continued)

| | Comparative Example 4 | Example 3 | Example 4 | Comparative Example 5 | Example 5 |
|---|---|---|---|---|---|
| Ratio of ingredients | 30% | 30% | 30% | 30% | 30% |
| Evaluation of palatability | B | A | A | B | A |
| Numerical value A: numerical value B | 60:40 | 70:30 | 70:30 | 60:40 | 70:30 |

From the results described above, the pet food of Examples 1 to 5 whose viscosity was in the range of 20 dPa·s to 35 dPa·s and ratio of fractions which did not pass through the sieve having a mesh of 4 mm was in the range of 70% by weight to 95% by weight and containing at least one gelling agent and at least one thickener were exhibited excellent palatability.

In addition, by virtue of the combination of the gelling agent and the thickener, a small amount of water in the soup of the gelee portion of pet food is separated, and as a result, the ratio of the fractions passing through the sieve having a mesh of 4 mm can be set to be in the range of 5% by weight to 30% by weight and freshness can be provided for the gelee portion.

Comparative Example 1 is an example using a gelling agent without using a thickener. The soup portion was gelled to the extent that an iron ball did not sink and thus the viscosity thereof was impossible to measure. The entire amount of fractions did not pass through the sieve having a mesh of 10 mm and the evaluation of the palatability was not performed.

Comparative Example 2 is an example using a thickener without using a gelling agent. The viscosity of the pet food was low and the sinking speed of the iron ball in the soup portion was high. The fluidity of the soup portion was high and the ratio of the fractions which did not pass through the sieve having a mesh of 4 mm was 50% by weight, which was small. The palatability of a cat for the pet food is degraded compared to those of Examples.

Comparative Example 3 is an example in which the viscosity of the pet food was high and the iron ball did not sink in the soup portion. The entire amount of the fractions did not pass through the sieve having a mesh of 4 mm and the ratio of the fractions passing through the sieve having a mesh of 10 mm was 5% by weight. The palatability of a cat for the pet food was degraded compared to those of Examples.

Comparative Example 4 is an example in which the viscosity of the pet food was low and the sinking speed of the iron ball in the soup portion was relatively high. The fluidity of the soup portion was high and the ratio of the fractions which did not pass through the sieve having a mesh of 4 mm was 65% by weight, which was small. The palatability of a cat for the pet food was degraded compared to those of Examples.

Comparative Example 5 is an example in which the viscosity of the pet food was high and the sinking speed of the iron ball in the soup portion was low. The fluidity of the soup portion was low, and the ratio of the fractions passing through the sieve having a mesh of 10 mm was 2% by weight and the ratio of the fractions passing through the sieve having a mesh of 4 mm was 1% by weight. The palatability of a cat for the pet food was degraded compared to those of Examples.

The respective configurations and the combinations thereof in the respective embodiment described above are merely examples and addition, omission, substitution, and other modifications of configurations are possible within the range not departing from the scope of the present invention. Further, the present invention is not limited by the respective embodiments and is limited only by the range of claims.

Industrial Applicability

The pet food of the present invention can be widely used in the field of feed for pet animals.

## Claims

1. Pet food,
   wherein the pet food is gel type pet food,
   the moisture content is 50% by weight or greater,
   the viscosity is in a range of 20 dPa·s to 35 dPa·s,
   the ratio of fractions which do not pass through a sieve having a mesh of 4 mm is in a range of 70% by weight to 95% by weight, and
   the pet food comprising at least one gelling agent and at least one thickener.

**2.** The pet food according to claim 1,
wherein the gelling agent is at least one selected from the group consisting of locust bean gum, carrageenan, agar, gellan gum, pectin, and alginic acid, and
the thickener is at least one selected from the group consisting of xanthan gum, guar gum, starch, gum Arabic, and tara gum.

**3.** The pet food according to claim 1 or 2,
wherein the sinking speed of an iron ball having a diameter of 1 cm and a weight of 4.5 g in a soup portion of the pet food is in a range of 2 cm/min to 18 cm/min.

**4.** The pet food according to any one of claims 1 to 3,
wherein the ratio of fractions which do not pass through a sieve having a mesh of 10 mm is in a range of 33% by weight to 85% by weight and is less than or equal to the ratio of fractions which do not pass through the sieve having a mesh of 4 mm.

**5.** The pet food according to any one of claims 1 to 4, containing flakes derived from at least one raw material selected from the group consisting of cattle, chicken, sheep, pigs, tuna, bonito, sardines, barracuda, sea bream, flounder, mackerel, and horse mackerel,
wherein the ratio of the flakes having a major axis of 30 mm or less is 90% by weight or greater with respect to the entire amount of the flakes.

**6.** The pet food according to any one of claims 1 to 5, comprising at least one ingredient selected from the group consisting of seafood, meat, vegetables, grains, mushrooms, eggs, and milk.

**7.** The pet food according to any one of claims 1 to 6, wherein the ratio of the ingredients is 50% by weight or less.

**8.** The pet food according to any one of claims 1 to 7, wherein the pet food is a feed for cats.

**9.** A method of producing the pet food according to any one of claims 1 to 8, comprising:

a process of adjusting the size of ingredients which contain flakes;
a process of mixing the ingredients whose size is adjusted with raw materials of a soup portion to obtain a mixture of the ingredients and the raw materials of the soup portion;
a process of filling a pouch container with the mixture of the ingredients and the raw materials of the soup portion; and
a process of retort-sterilizing the pouch container.

## INTERNATIONAL SEARCH REPORT

International application No.

PCT/JP2014/065088

### A. CLASSIFICATION OF SUBJECT MATTER
*A23K1/18*(2006.01)i, *A23K1/00*(2006.01)i

According to International Patent Classification (IPC) or to both national classification and IPC

### B. FIELDS SEARCHED

Minimum documentation searched (classification system followed by classification symbols)
A23K1/00-3/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-514457 A (Nestec S.A.),<br>28 June 2012 (28.06.2012),<br>paragraphs [0021], [0033], [0035], [0044],<br>[0047], [0051]<br>& US 2011/0300256 A1    & EP 2387328 A<br>& WO 2010/080144 A2    & CA 2747866 A<br>& CN 102271531 A    & AU 2009336206 A<br>& MX 2011007288 A    & RU 2011133056 A | 1-9 |
| Y | DELICATESSEN Toriniku to Liver no Wafu Gelee,<br>TIARA PETS, [online], 23 May 2013 (23.05.2013)<br>(archive date), [retrieval date 15 August 2014<br>(15.08.2014)], Internet <https://web.archive.<br>org/web/20130523041918/http://www.tiarapets.<br>com/products/list112.html> | 1-9 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>    15 August, 2014 (15.08.14) | Date of mailing of the international search report<br>    26 August, 2014 (26.08.14) |
| Name and mailing address of the ISA/<br>    Japanese Patent Office | Authorized officer |
| Facsimile No. | Telephone No. |

Form PCT/ISA/210 (second sheet) (July 2009)

# EP 3 011 840 A1

**INTERNATIONAL SEARCH REPORT**

International application No.

PCT/JP2014/065088

C (Continuation).    DOCUMENTS CONSIDERED TO BE RELEVANT

| Category* | Citation of document, with indication, where appropriate, of the relevant passages | Relevant to claim No. |
|---|---|---|
| Y | «Pet Paradise» ●Diet Hojo Shokuhin, Kozuko o Haigo ●Wanchan-yo Kanten de Nagomi Diet, [online], 31 August 2011 (31.08.2011) (archive date), [retrieval date 15 August 2014 (15.08.2014)], Internet <https://web.archive.org/web/20110831121858/http://item.rakuten.co.jp/pet-para/990-59666/> | 1-9 |
| A | JP 2008-148714 A  (Societe des Produits Nestle S.A.),<br>03 July 2008 (03.07.2008),<br>entire text; all drawings<br>& JP 2004-521636 A        & US 2004/0131745 A1<br>& US 2008/0152774 A1      & EP 1250851 A1<br>& EP 1381286 A           & WO 2002/087356 A1<br>& DE 60215628 D          & CA 2444203 A<br>& BR 208973 A            & AT 343328 T<br>& UY 27267 A             & ZA 200308941 A<br>& AU 2002338491 B        & AR 35859 A<br>& PE 11472002 A | 1-9 |
| A | Pet Yohin Guide Dog-hen, DOG PARADISE 2013, 2013.04, page 74 | 1-9 |
| A | JP 11-221025 A  (Maruha Pet Food Co., Ltd.),<br>17 August 1999 (17.08.1999),<br>entire text; all drawings<br>(Family: none) | 1-9 |

Form PCT/ISA/210 (continuation of second sheet) (July 2009)

**REFERENCES CITED IN THE DESCRIPTION**

**Patent documents cited in the description**

- JP 2013120262 A
- JP 2007020448 A